# EUROPEAN PATENT APPLICATION

(11) **EP 4 700 611 A1**
(43) Date of publication of application: **25.02.2026**
(21) Application number: 25181525.4
(22) Date of filing: 06.06.2025
(51) Int. Cl.: G06F 18/214, B64F 5/60, G05B 23/02

(54) **BALANCED TRAINING DATASETS FOR PREDICTING AIRCRAFT COMPONENT FAULTS**

(30) Priority: 20.08.2024 US 202418810272
(71) Applicant: The Boeing Company, Arlington, VA 22202 (US)
(72) Inventor: WANG, Changzhou, Arlington, 22202 (US)
(74) Representative: Bryn-Jacobsen, Caelia

(57) **Abstract**

The present disclosure provides a method of generating a balanced training dataset for a machine learning model in one aspect, the method including: receiving flight sensor data corresponding to a plurality of flights, and applying one or more criteria to the flight sensor data to generate a training dataset including a plurality of first instances corresponding to flights of the plurality of flights. The method further includes assigning, using component fault data, respective labels to the plurality of first instances, and generating, for groups of one or more labels of the respective labels, a respective plurality of flight series. Each flight series includes a respective sequence of second instances that is based on some of the plurality of first instances, and that concludes with a second instance that is assigned a label included in the group.

## Description

### FIELD

Aspects of the present disclosure relate to aircraft maintenance, and more specifically, to techniques for augmenting flight sensor data for predicting aircraft component faults.

### BACKGROUND

The accurate prediction of aircraft component faults contributes to the safety, efficiency, and reliability of aviation operations. By accurately predicting when and how components might generate a fault, component degradation can be detected earlier to enable maintenance teams to perform timely interventions, replacing or repairing parts before they reach a fault condition. These interventions may be effective to prevent more severe damage and reduce repair costs. This proactive approach can optimize the maintenance schedule, which reduces downtime and operational costs to the airlines.

In addition to improved safety and operational efficiency, the accurate prediction of aircraft component faults has significant economic benefits. It minimizes the unexpected grounding of aircraft, which disrupts flight schedules and often leads to financial losses for airlines. Predictive maintenance allows airlines to plan maintenance activities during scheduled downtimes, thereby maintaining the optimal availability of the fleet.

### SUMMARY

The present disclosure provides a method of generating a balanced training dataset for a machine learning model in one aspect, the method including: receiving flight sensor data corresponding to a plurality of flights, and applying one or more criteria to the flight sensor data to generate a training dataset including a plurality of first instances corresponding to flights of the plurality of flights. The method further includes assigning, using component fault data, respective labels to the plurality of first instances, and generating, for groups of one or more labels of the respective labels, a respective plurality of flight series. Each flight series includes a respective sequence of second instances that is based on some of the plurality of first instances, and that concludes with a second instance that is assigned a label included in the group.

In one aspect, in combination with any example method above or below, generating the respective plurality of flight series includes, for a first group of the groups: determining a count of those first instances, of the plurality of first instances, that have a label included in the first group. Generating the respective plurality of flight series further includes determining a scale factor based on a quotient of a target number of flight series and the count of the first instances, and generating a scale factor number of copies of each of the first instances having a label included in the first group.

In one aspect, in combination with any example method above or below, generating the respective plurality of flight series further includes: forming the sequence of second instances. Forming the sequence of second instances includes: adding noise to values of one or more respective features of the scale factor number of copies of each of the first instances.

In one aspect, in combination with any example method above or below, forming the sequence of second instances further includes: dropping one or more second instances from an initial sequence of second instances.

In one aspect, in combination with any example method above or below, assigning respective labels to the plurality of first instances is according to a remaining useful life (RUL) function for an aircraft component.

In one aspect, in combination with any example method above or below, assigning respective labels to the plurality of first instances includes: applying a clipped linear function to the RUL function, such that values of the RUL function between an upper threshold and a lower threshold are assigned linearly interpolated values as the respective labels.

In one aspect, in combination with any example method above or below, the method further includes generating one or more cross-flight features for the plurality of flight series.

The present disclosure provides a computer program product in one aspect, the computer program product including: a computer-readable storage medium having computer-readable program code embodied therewith. The computer-readable program code is executable by one or more computer processors to perform an operation includes: receiving flight sensor data corresponding to a plurality of flights, and applying one or more criteria to the flight sensor data to generate a training dataset including a plurality of first instances corresponding to flights of the plurality of flights. The operation further includes assigning, using component fault data, respective labels to the plurality of first instances, and generating, for groups of one or more labels of the respective labels, a respective plurality of flight series. Each flight series includes a respective sequence of second instances that is based on some of the plurality of first instances, and that concludes with a second instance that is assigned a label included in the group.

In one aspect, in combination with any example computer program product above or below, generating the respective plurality of flight series includes, for a first group of the groups: determining a count of those first instances, of the plurality of first instances, that have a label included in the first group. Generating the respective plurality of flight series further includes determining a scale factor based on a quotient of a target number of flight series and the count of the first instances, and generating a scale factor number of copies of each of the first instances having a label included in the first group.

In one aspect, in combination with any example computer program product above or below, generating the respective plurality of flight series further includes: forming the sequence of second instances. Forming the sequence of second instances includes: adding noise to values of one or more respective features of the scale factor number of copies of each of the first instances.

In one aspect, in combination with any example computer program product above or below, forming the sequence of second instances further includes: dropping one or more second instances from an initial sequence of second instances.

In one aspect, in combination with any example computer program product above or below, assigning respective labels to the plurality of first instances is according to a remaining useful life (RUL) function for an aircraft component.

In one aspect, in combination with any example computer program product above or below, assigning respective labels to the plurality of first instances includes: applying a clipped linear function to the RUL function, such that values of the RUL function between an upper threshold and a lower threshold are assigned linearly interpolated values as the respective labels.

In one aspect, in combination with any example computer program product above or below, the operation further includes: generating one or more cross-flight features for the plurality of flight series.

The present disclosure provides a system in one aspect, the system including: one or more processors, and a memory storing instructions that when executed by the one or more processors enable performance of an operation. The operation includes receiving flight sensor data corresponding to a plurality of flights, and applying one or more criteria to the flight sensor data to generate a training dataset including a plurality of first instances corresponding to flights of the plurality of flights. The operation further includes assigning, using component fault data, respective labels to the plurality of first instances, and generating, for groups of one or more labels of the respective labels, a respective plurality of flight series. Each flight series includes a respective sequence of second instances that is based on some of the plurality of first instances, and that concludes with a second instance that is assigned a label included in the group.

In one aspect, in combination with any example system above or below, generating the respective plurality of flight series includes, for a first group of the groups: determining a count of those first instances, of the plurality of first instances, that have a label included in the first group. Generating the respective plurality of flight series further includes determining a scale factor based on a quotient of a target number of flight series and the count of the first instances, and generating a scale factor number of copies of each of the first instances having a label included in the first group.

In one aspect, in combination with any example system above or below, generating the respective plurality of flight series further includes: forming the sequence of second instances. Forming the sequence of second instances includes: adding noise to values of one or more respective features of the scale factor number of copies of each of the first instances.

In one aspect, in combination with any example system above or below, forming the sequence of second instances further includes: dropping one or more second instances from an initial sequence of second instances.

In one aspect, in combination with any example system above or below, assigning respective labels to the plurality of first instances is according to a remaining useful life (RUL) function for an aircraft component.

In one aspect, in combination with any example system above or below, assigning respective labels to the plurality of first instances includes: applying a clipped linear function to the RUL function, such that values of the RUL function between an upper threshold and a lower threshold are assigned linearly interpolated values as the respective labels.

### BRIEF DESCRIPTION OF THE DRAWINGS

So that the manner in which the above-recited features can be understood in detail, a more particular description, briefly summarized above, may be had by reference to example aspects, some of which are illustrated in the appended drawings.
Figure 1 depicts an example system of generating a balanced training dataset for a machine learning model, according to one or more aspects.
Figure 2 is a block diagram illustrating operation of an example dataset preparation service, according to one or more aspects.
Figures 3A and 3B depict an example method of generating a balanced training dataset for a machine learning model, according to one or more aspects.
Figure 4 depicts plots of assigning labels to instances using a clipped linear function, according to one or more aspects.

### DETAILED DESCRIPTION

A data-driven machine learning-based approach is beneficial to complement the physics-driven approach typically used for aircraft component fault prediction. The machine learning-based approach tends to be more effective than even subject matter experts at capturing complex dynamics that exist between components of the various aircraft systems.

A major challenge with a machine learning-based approach is that the flight sensor data tends to be extremely unbalanced, as aircraft components are generally reliable and faults are relatively rare events. As a result, the dataset can include ten times (or more) data reflecting nominal flights (e.g., when all aircraft components are considered healthy) than reflecting degraded flights. Further, aircraft components can degrade gradually over time, instead of instantaneously generating a fault.

According to aspects described herein, component fault data is used in conjunction with flight sensor data to assign labels to instances (e.g., individual flights) reflected in the flight sensor data. For example, a remaining useful life (RUL) can be calculated for an aircraft component using the component fault data, and the RUL (or a function thereof) may be used to assign the respective labels. In some aspects, the assigned labels are continuous (numerical) values that are formed into groups of one or more labels.

The flight sensor data may include a number of "original" flight series that reflect an unmodified sequence of those flights corresponding to a particular aircraft or component. In some aspects, those original flight series are copied and modified, typically through adding noise and/or dropping certain flight sensor data, to generate synthesized flight series. In this way, the synthesized flight series augment the original flight series to allow the training dataset for the machine learning model to include comparable numbers of instances for each of the groups of labels. In this way, the training dataset is more balanced and typically corresponds to better learning by the machine learning model.

Using the training set developed according to aspects described herein, the machine learning model may also demonstrate better performance by providing more accurate predictions of aircraft component faults. In some cases, airlines or other aircraft operators may use these more accurate predictions to develop schedules for predictive maintenance that improve the availability of aircraft along specific routes, or across the fleet as a whole. In some cases, the more accurate predictions and/or predictive maintenance schedules may be used by maintenance supervisors to improve the availability and utilization of maintenance personnel, which is further aided by the reduction in reactive maintenance events (e.g., following component faults). In some cases, the more accurate predictions may be used by distributors or suppliers to timely provide replacement components to the airlines or operators. In some cases, the more accurate predictions may be used by engineers or component manufacturers to better understand the dynamics existing between different components of the aircraft, leading to improved aircraft and/or component designs.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

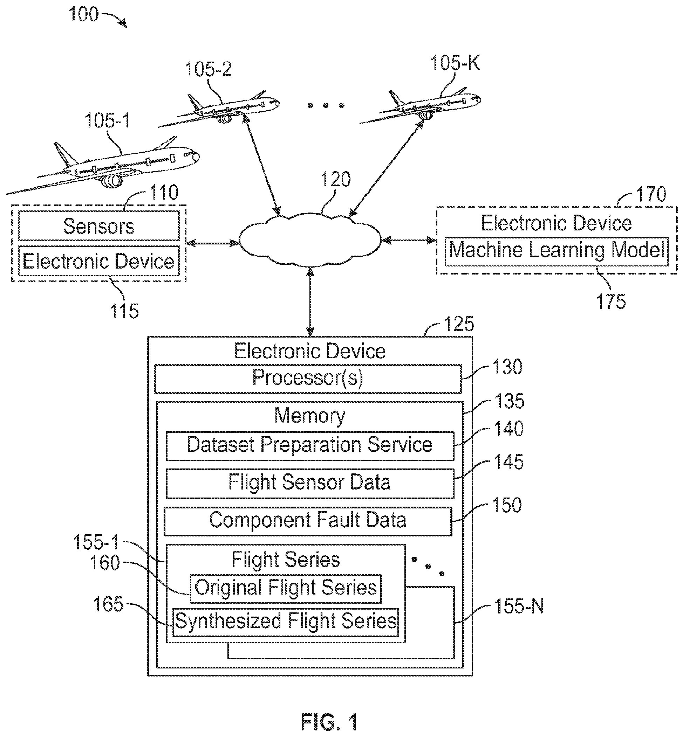

Figure 1 depicts an example system 100 of generating a balanced training dataset for a machine learning model, according to one or more aspects. The features described with respect to Figure 1 may be used in conjunction with other aspects. Further, although the description is directed to aircraft maintenance, the techniques described herein may be applied to other industries that use preventative maintenance on components.

The system 100 comprises a plurality of aircraft 105-1, 105-2, ..., 105-K (also referred to individually or collectively as aircraft 105) having any suitable type(s) and/or configuration(s). Each aircraft 105 comprises a respective plurality of sensors 110 that are communicatively coupled with at least one electronic device 115, as would be understood by the person of ordinary skill. As used herein, an "electronic device" generally refers to any device having electronic circuitry that provides a processing or computing capability, and that implements logic and/or executes program code to perform various operations that collectively define the functionality of the electronic device. The functionality of the electronic device includes a communicative capability with one or more other electronic devices, e.g., when connected to a same network. An electronic device may be implemented with any suitable form factor, whether relatively static in nature (e.g., mainframe, computer terminal, server, kiosk, workstation) or mobile (e.g., laptop computer, tablet, handheld, smart phone, wearable device). The communicative capability between electronic devices may be achieved using any of a number of suitable techniques, such as conductive cabling, wireless transmission, optical transmission, and so forth. Further, although described as being performed by a single electronic device, in other aspects, the functionalities of the system 100 may be performed by a plurality of electronic devices.

The sensors 110 may be operated to monitor various components of the aircraft 105. The sensors 110 may be implemented in any suitable form, such as discrete sensor devices, sensor hardware that is fully or partly integrated into the components, or processors or other circuitry that supplies information that can be used for diagnostic and/or maintenance purposes. Some non-limiting examples of the sensors 110 include vibration sensors (e.g., accelerometers), temperature sensors (e.g., thermocouples, infrared sensors), pressure sensors (e.g., piezoelectric, capacitive, or strain gauge-based), fluid quality sensors (e.g., optical sensors, capacitive sensors, magnetic particle detectors), load sensors (e.g., strain gauges, load cells), crack detection sensors (e.g., eddy current sensors, ultrasonic sensors), corrosion sensors (e.g., electrical resistance sensors, galvanic sensors), voltage and current sensors (e.g., Hall effect sensors, shunt resistors), flow sensors, humidity sensors, air quality sensors (e.g., chemical sensors, particulate sensors).

The flight sensor data 145 that is acquired by the sensors 110 may be provided to the electronic device 115 in any suitable form (e.g., as analog or digital signals; structured, semi-structured, or unstructured data). In some cases, the electronic device 115 may supply power and/or signals to the sensors 110 to control the operation thereof. The electronic device 115 may be implemented in any suitable form in the aircraft 105, such as a flight management system (FMS) computer, an aircraft condition monitoring system (ACMS) computer, and an environmental control system (ECS) computer, or combinations thereof. The electronic device 115 may be implemented in other forms onboard the aircraft 105, which may include standalone devices.

The electronic devices 115 of the aircraft 105 communicate with at least one other electronic device 125 through a network 120. The network 120 may have any suitable implementation, such as one or more wide area networks (WANs), one or more local access networks (LANs), or combinations thereof. The network 120 comprises infrastructure for communicative capability, such as conductive cabling, wireless transmission, optical transmission, and so forth. The network 120 may further comprise one or more electronic devices providing network functionality and/or services to the network 120, such as routers, firewalls, switches, gateway computers, edge servers, and so forth.

In some aspects, the electronic devices 115 are configured to communicate with the electronic device 125 during flight operations of the respective aircraft 105 (e.g., through wireless communications). In other aspects, and in addition to or alternate to communications during flight operations, the electronic devices 115 are configured to communicate with the electronic device 125 outside of flight operations (e.g., flight sensor data 145 is downloaded through cabling or optical fibers that are connected to the aircraft 105 when stationary, or through wireless communications).

The electronic device 125 comprises one or more processors 130 and a memory 135. The one or more processors 130 are any electronic circuitry, including, but not limited to, one or a combination of microprocessors, microcontrollers, application-specific integrated circuits (ASIC), application-specific instruction set processors (ASIP), and/or state machines, that is/are communicatively coupled to the memory 135 and control(s) the operation of the electronic device 125. The one or more processors 130 are not limited to a single processing device and may encompass multiple processing devices.

The one or more processors 130 may include other hardware that operates software to control and process information. In some aspects, the one or more processors 130 execute software stored in the memory 135 to perform any of the functions described herein. The one or more processors 130 control the operation and administration of the electronic device 125 by processing information (e.g., information received from input devices and/or communicatively coupled electronic devices).

The memory 135 may store, either permanently or temporarily, data, operational software, or other information for the one or more processors 130. The memory 135 may include any one or a combination of volatile or non-volatile local or remote devices suitable for storing information. For example, the memory 135 may include random access memory (RAM), read only memory (ROM), magnetic storage devices, optical storage devices, or any other suitable information storage device or a combination of these devices. The software represents any suitable set of instructions, logic, or code embodied in a computer-readable storage medium. For example, the software may be embodied in the memory 135, a disk, a CD, or a flash drive. In particular examples, the software may include an application executable by the one or more processors 130 to perform the functionality described herein (e.g., a dataset preparation service 140, discussed below).

In this example, the memory 135 stores the dataset preparation service 140 that generates a balanced training dataset for a machine learning model 175. In some aspects, the dataset preparation service 140 receives the flight sensor data 145 from the various aircraft 105 through the network 120.

The dataset preparation service 140 further receives component fault data 150 for various components of the aircraft 105. In some aspects, the component fault data 150 is provided by the aircraft 105 through the network 120, and may be explicitly identified as a component fault by the electronic device 115 onboard the aircraft 105, or inferred from anomalous flight sensor data 145. In some aspects, the component fault data 150 may be provided by human operators. For example, pilots or other crew may communicate component malfunctions or faults, maintenance personnel may log component faults after inspection, repair shop testing may provide a mode of component fault, and so forth.

In some aspects, the component fault data 150 includes time information (e.g., when a particular component fault occurred), such as a timestamp or a distinct flight identifier. In some aspects, the component fault data 150 further includes mode information (e.g., how the component fault occurred). In one non-limiting example, the component fault data 150 includes an identifier of the aircraft 105, an installation position, a time, a component part number and serial number, a fault mode, and a repair cost. In another example, the component fault data 150 further includes an installation condition of the component (e.g., repaired or new when installed) and a measure of the usage of the component (e.g., a time, a number of cycles, a number of hours) since the installation.

The dataset preparation service 140 correlates the component fault data 150 with the flight sensor data 145. In some aspects, the dataset preparation service 140 uses the component fault data 150 to assign labels to the individual flights (also referred to herein as "instances") that are encompassed by the flight sensor data 145. In some aspects, assigning labels comprises selecting a label from a predefined set of labels. The labels may be discrete labels (e.g., corresponding to a classification model) or labels representing numerical values (e.g., corresponding to a regression model). Other types of labels are also contemplated (e.g., representing ordinal values with mappings to numerical values).

In some aspects, the dataset preparation service arranges the labels into groups of labels G1, G2, ..., GN, where each group includes one or more labels. For example, where the labels represent numerical values, the groups of labels may be defined by ranges of values. Although the discussion below is directed primarily to groups of labels, it is noted that the techniques are also compatible with discrete labels (e.g., each group represents one particular label).

The dataset preparation service 140 generates, for groups of one or more labels of the assigned labels, a respective plurality of flight series 155-1, ..., 155-N (also referred to individually or collectively as flight series 155) that are stored in the memory 135. In some aspects, the dataset preparation service 140 generates a respective plurality of flight series 155 for each of the groups of label(s) that are represented in the flight sensor data 145.

The instances (or flights) that are reflected in the flight sensor data 145 are referred to as a plurality of first instances. In some aspects, each flight series 155 that is generated by the dataset preparation service 140 comprises a respective sequence of second instances that is based on some of the plurality of first instances. In some aspects, the sequence of second instances for each flight series 155 concludes with a second instance that is assigned an individual label that is included in the corresponding group.

In some aspects, the flight series 155 that are generated for a particular group of label(s) comprises one or more original flight series 160 representing a sequence of some of the first instances occurring in the flight sensor data 145. For example, the original flight series 160 may reflect an unmodified sequence of those first instances (or flights) corresponding to a particular aircraft 105 (or to a particular component thereof). However, as discussed above, the flight sensor data 145 tends to be extremely unbalanced as component faults are relatively rare events. As a result, those first instances appearing within the original flight series 160 can reflect ten times (or more) nominal flights.

In some aspects, the flight series 155 comprises one or more synthesized flight series 165 that are generated based on the first instances reflected in the flight sensor data 145. The one or more synthesized flight series 165 may be present in the flight series 155 in addition to, or alternate to, the one or more original flight series 160.

In some aspects, generating the flight series 155 (and more specifically, generating the synthesized flight series 165) comprises forming the sequence of second instances. In some aspects, generating the synthesized flight series 165 comprises generating a number of copies of the original flight series 160, and modifying some or all of the instances that are contained within the copies of the original flight series 160. The number of copies that are generated for a particular group of label(s) may be determined based on the number of original flight series 160 having a label included in the group. In some aspects, the total number of flight series contained in each of the flight series 155-1, ..., 155-N (e.g., the respective sum of the original flight series 160 and the synthesized flight series 165) is approximately the same, so that the resulting dataset includes approximately the same number of each group of label(s). In this way, the number of second instances having those labels of a group that appear less frequently in the first instances (e.g., indicating that component fault has occurred or is imminent) may be comparable to the number of second instances having those labels in the same group that appear more frequently in the first instances, which balances the training of the ML model 175 and tends to improve the learning thereof.

In some aspects, forming the sequence of second instances comprises, within the copies of the original flight series 160, adding noise to values of one or more features of the first instances. The noise may be added according to any suitable criteria. In some aspects, the added noise may be controlled such that the values are varied within a sensor resolution and/or recording resolution. Further, for event timing-based features, adding noise may more accurately represent network delay that occurs between different components.

In some aspects, forming the sequence of second instances further comprises, within the copies of the original flight series 160, dropping (or removing) one or more second instances. The number and/or particular combination of second instances that are dropped from the sequence may be determined according to any suitable techniques, and are typically random so that different sequences of second instances will have different combinations of instances removed. Generally, dropping the one or more second instances (representing actual or synthesized flights) can make training of the ML model 175 more challenging, but once trained the ML model 175 tends to be more robust.

Any suitable implementation of the ML model 175 is contemplated. Some non-limiting examples of the ML model 175 include tree-based regression models (e.g., random forest, xgBoost) with temporal feature extraction methods, or recurrent neural network that directly deal with multivariate time series. In some examples, the ML model 175 is implemented in an electronic device 170 that is separate from the electronic device 125. In other examples, the ML model 175 is implemented in the electronic device 125 (e.g., stored in the memory 135).

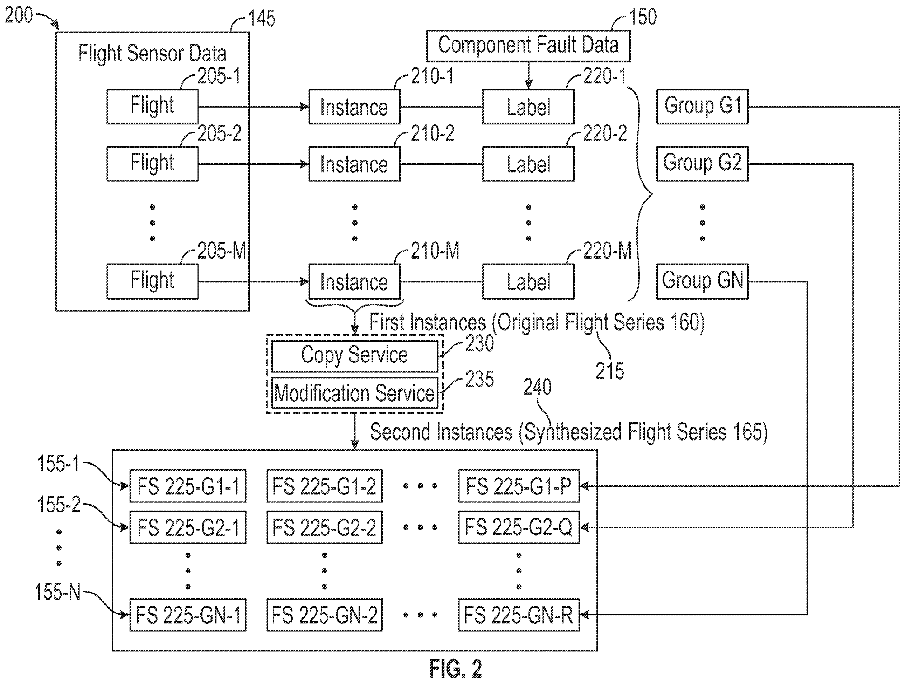

Further description of the operation of the dataset preparation service 140 is provided in the block diagram 200 of Figure 2. The features described with respect to Figure 2 may be used in conjunction with other aspects.

As described above, the flight sensor data 145 is acquired by the sensors 110 and may be provided to the electronic device 115 in any suitable form. The flight sensor data 145 encompasses a plurality of flights 205-1, 205-2, ..., 205-M. The plurality of flights 205-1, 205-2, ..., 205-M may include flights of a particular aircraft 105 having a same configuration (e.g., a same set of monitored components), flights of the aircraft 105 having different configuration (e.g., having one or more components substituted), flights by different aircraft 105, and/or flights by different operators.

The flight sensor data 145 for each of the plurality of flights 205-1, 205-2, ..., 205-M typically includes thousands of parameters that are sampled at a 1 sample per second (or greater) rate for periods of up to ten hours or more. The flight sensor data 145 includes in-air sections and may further include ground sections before takeoff and/or after landing. In some aspects, the flight sensor data 145 that is acquired for each flight 205-1, 205-2, ..., 205-M is represented as a separate instance of a plurality of instances 210-1, 210-2, ..., 210-M (e.g., stored as separate files, or as separate record(s) within a structured data format). The plurality of instances 210-1, 210-2, ..., 210-M is referred to collectively as first instances 215. The first instances 215 encompass one or more original flight series 160. Stated another way, an original flight series 160 includes a subset of the first instances 215 (e.g., those flights corresponding to a single aircraft 105).

In some aspects, the dataset preparation service 140 performs preprocessing of the flight sensor data 145 when forming the instances 210-1, 210-2, ..., 210-M. The preprocessing may include any suitable functions, such as data cleaning, data transformation, segmentation, feature extraction and engineering, dimensionality reduction, categorical encoding, and so forth. In some aspects, the preprocessing may create (and/or identify) hundreds or thousands of features from the various parameters of the flight sensor data 145.

The dataset preparation service 140 correlates the component fault data 150 with the plurality of instances 210-1, 210-2, ..., 210-M, and assigns a respective label 220-1, 220-2, ..., 220-M to each of the plurality of instances 210-1, 210-2, ..., 210-M. In some aspects, the dataset preparation service 140 performs preprocessing of the component fault data 150 when assigning a respective label 220-1, 220-2, ..., 220-M to each of the plurality of instances 210-1, 210-2, ..., 210-M. In some aspects, each of the labels 220-1, 220-2, ..., 220-M is selected from a predefined plurality of labels. Each of the plurality of labels may be discrete labels (e.g., corresponding to a classification model) or labels representing numerical values (e.g., corresponding to a regression model).

In some aspects, assigning the respective labels 220-1, 220-2, ..., 220-M to the plurality of first instances is according to a remaining useful life (RUL) function for an aircraft component. In some aspects, the RUL function is derived from timing information included in the component fault data 150. For example, the date and time of a component fault may be represented directly in the component fault data 150, or may be inferred from anomalous values, missing values, etc. represented in the component fault data 150. Other measures of the RUL function are also contemplated, such as a count or duration of cycles or operations of the component (e.g., flight cycles or flight hours), or a count or duration of higher-intensity operations (e.g., startup-shutdown cycles for a motorized component, duration of time operating in a high-power mode). In some aspects, the values of the RUL function are referenced to the component fault (e.g., 10 flights to component fault, 30 days to component fault, 100 cycles to component fault).

In some aspects, assigning the respective labels 220-1, 220-2, ..., 220-M to the plurality of first instances comprises applying a function to the RUL function. The applied function may use any suitable timescale and threshold value(s), which may depend on various factors such as an importance (or criticality) of the component, an amount of maintenance required to repair (or replace) the component, a flight schedule for the aircraft 105, an availability of maintenance personnel, business objectives (e.g., costs of potential service interruptions), and so forth. Further, the applied function may be applied directly to the RUL function, or to a transformation thereof. For example, the applied function may be applied to a square root or a logarithm of the RUL function.

In one non-limiting example, a clipped linear function is applied to the RUL function, such that values of the RUL function between an upper threshold (e.g., 30 days to component fault) and a lower threshold (e.g., 90 days to component fault) are assigned linearly interpolated values as the respective labels. Continuing the example, those values of the RUL function that are greater than the upper threshold (e.g., less than 30 days) are assigned a "1" value as the label, and values that are less than the lower threshold (e.g., more than 90 days) are assigned a "0" value as the label. In this example, three groups of labels may be defined: a "0" group for "0" labels, a "1" group for "1" labels, and an "I" (interpolated) group for the linearly interpolated labels. Other techniques for defining the groups of labels are also contemplated.

The first instances 215 (which in some cases are arranged as one or more original flight series 160) are provided to a copy service 230 of the dataset preparation service 140. In some aspects, the copy service 230 generates copies of the first instances 215 such that a count for each group of labels is approximately the same, so that the resulting dataset includes approximately the same number for each of the groups.

In some aspects, the dataset preparation service 140 further comprises a modification service 235 that modifies some or all of the first instances 215 (that are included in the copies of the original flight series 160) to form a plurality of second instances 240. In some aspects, modifying some or all of the first instances 215 comprises adding noise to values of one or more features of the first instances 215, and/or (randomly) dropping one or more of the second instances 240, which are discussed above. In some aspects, the plurality of second instances 240 are arranged as one or more synthesized flight series 165.

The dataset preparation service 140 generates a respective plurality of flight series 155-1, 155-2, ..., 155-N for each group of label(s) G1, G2, ..., GN. As shown in the block diagram 200, a plurality of flight series 155-1 corresponds to label(s) of a first group G1 and comprises P flight series (FS) 225-G1-1, 225-G1-2, ..., 225-G1-P, a plurality of flight series 155-2 corresponds to a label(s) of a second group G2 and comprises Q FS 225-G2-1, 225-G2-2, ..., 225-G2-Q, and a plurality of flight series 155-N corresponds to label(s) of a Nth group GN and comprises R FS 225-GN-1, 225-GN-2, ..., 225-GN-R. In some aspects, each of the plurality of flight series 155-1, 155-2, ..., 155-N comprises one or more original flight series 160 and one or more synthesized flight series 165 (e.g., representing unmodified and/or modified copies of the one or more original flight series 160). In some aspects, the values of P, Q, and R are approximately the same to provide a balanced training set across the plurality of groups G1, G2, ..., GN.

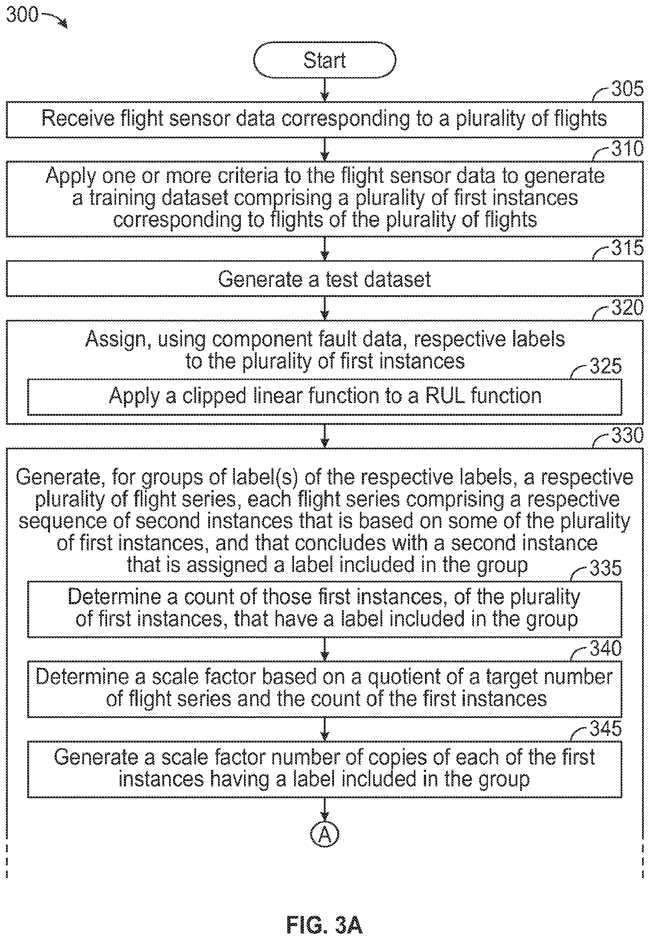

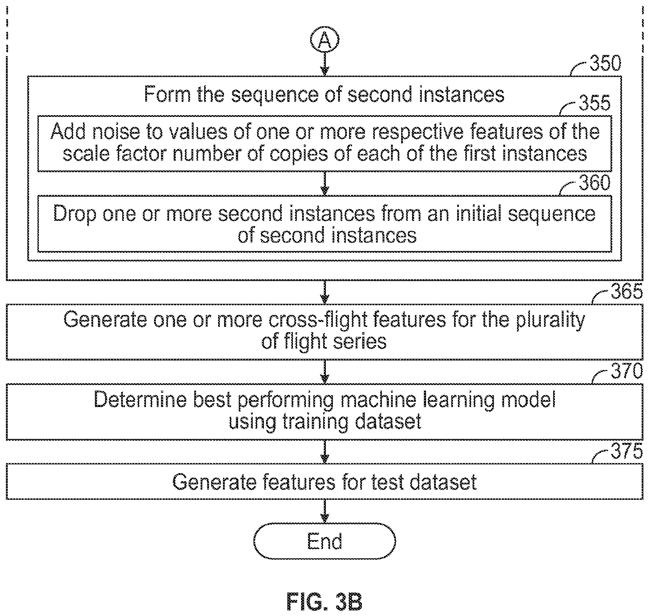

Figures 3A and 3B depict an example method 300 of generating a balanced training dataset for a machine learning model, according to one or more aspects. The features described with respect to the method 300 may be used in conjunction with other aspects. For example, the method 300 may be performed by the dataset preparation service 140 described above with respect to Figures 1 and 2.

The method 300 begins at block 305, where the dataset preparation service 140 receives flight sensor data 145 corresponding to a plurality of flights 105. In some aspects, the dataset preparation service 140 preprocesses the flight sensor data 145 according to one or more techniques briefly discussed above.

At block 310, the dataset preparation service 140 applies one or more criteria to the flights to generate a training dataset comprising a plurality of first instances 215 corresponding to flights of the plurality of flights. In some aspects, at block 315, the dataset preparation service 140 generates a test dataset. Generally, because of the temporal nature of the flight sensor data 145, the flight sensor data 145 is not shuffled and/or split randomly.

In some aspects, the dataset preparation service 140 generates the training dataset and the test dataset by splitting the flight sensor data 145 according to a single point in time. For example, all flights before the time are designated as training data, and all flights after the time designated as test data. This approach tends to align with flight operations, as the ML model can be developed using historical data, and new flight data after the development of the ML model are used to make real predictions.

In some aspects, the dataset preparation service 140 generates the training dataset and the test dataset by splitting the flight sensor data 145 according to the components. For example, all flights with the same component (from a time of installation to a time of removal) are designated into one (but not both) of the training data or the test data.

In some aspects, the dataset preparation service 140 generates the training dataset and the test dataset by splitting the flight sensor data 145 according to the aircraft 105. For example, all flights of the same aircraft 105 are designated into one (but not both) of the training data or the test data.

In some aspects, the one or more criteria may further include one or more soft constraints that tend to promote a similarity of the distributions of the training data and the test data. For example, the soft constraints may include a flight hour distribution, an owner or operator distribution, a fault case distribution, and so forth.

In some aspects, a user may review the training dataset and input one or more hypotheses to the dataset preparation service 140 to discover one or more relevant features of the flights reflected in the training dataset. In some aspects, the user provides iterative exploration and/or validation (e.g., using different window sizes and thresholds) to refine the definitions of events and aggregations within the training dataset.

In some aspects, the dataset preparation service 140 adds one or more features for the flights reflected in the training dataset. For example, the features may include a configuration of the aircraft 105, an operational condition (e.g., weather, operator types), whether any flights are missing, warning messages and/or fault messages generated during the flights, and so forth. In another example, a pair of features from symmetric sub-systems may be identical during nominal conditions, and certain faults may be indicated by a deviation between the pair of features. A new feature may be generated as the difference between the pair of features, and its statistical relevance to the label may be determined.

At block 320, the dataset preparation service 140 assigns, using the component fault data 150, respective labels to the plurality of first instances. In some aspects, assigning the respective labels is according to a remaining useful life (RUL) function for an aircraft component. In some aspects, the labels are discrete labels (e.g., corresponding to a classification model) or labels representing numerical values (e.g., corresponding to a regression model). In some aspects, assigning the respective labels comprises (at block 325) applying a clipped linear function to the RUL function (or to a transformation thereof).

In some aspects, the dataset preparation service 140 filters out one or more generated features from the training dataset. For example, the dataset preparation service 140 may remove feature(s) that are statistically irrelevant to the assigned label, or that are more strongly correlated with other features. Filtering out the feature(s) may be beneficial to reduce the computational expense of training the ML model, as a large number of features (e.g., hundreds or thousands) may be generated from each flight.

At block 330, the dataset preparation service 140 generates, for groups of label(s) of the respective labels, a respective plurality of flight series. Each flight series comprises a respective sequence of second instances that is based on some of the plurality of first instances, and that concludes with a second instance that is assigned a label included in the group.

In some aspects, generating the respective plurality of flight series comprises, at block 335, determining a count of those first instances, of the plurality of first instances, that have a label included in the group. In some aspects, generating the respective plurality of flight series comprises, at block 340, determining a scale factor based on a quotient of a target number of flight series and the count of the first instances. For example, assume M represents the count of the first instances having the first individual label, and C represents the target number of flight series for the group. In some aspects, the scale factor *K* may be determined according to *K* = Ceiling (*C* / *M*). In some aspects, generating the respective plurality of flight series comprises, at block 345, generating a scale factor number of copies (e.g., *K x M* copies) of each of the first instances having a label included in the group. Other techniques for generating the copies for the respective plurality of flight series are also contemplated.

In some aspects, generating the respective plurality of flight series comprises, at block 350, forming the sequence of second instances. In some aspects, at block 355, the dataset preparation service 140 adds noise to values of one or more respective features of the scale factor number of copies of each of the first instances. The feature(s) having noise added may be selected according to any suitable techniques. For example, a user may review the first instances and provide user inputs based on the perceived relevance of particular feature(s). In some cases, the user may further specify the noise levels to be applied, or limits to the noise levels.

In some aspects, generating the respective plurality of flight series comprises, at block 360, (randomly) dropping one or more second instances from an initial sequence of second instances. The number of second instances to drop may be selected according to any suitable techniques. For example, a user input may specify a proportion (e.g., 10 percent) applied uniformly to each of the flight series, or random selection within a range of values (e.g., between zero and 10 percent) applied across the different flight series.

At block 365, the dataset preparation service 140 generates one or more cross-flight features for the plurality of flight series. In some aspects, generating the one or more cross-flight features comprises applying one or more time series feature generation techniques. In one example, statistical methods may be used to determine a median or standard deviation across the flights of the different flight series. In another example, moving averages or differences may be calculated. In another example, linear regression fit statistics on moving averages may be calculated. In another example, statistical time series analysis methods such as autocorrelation, autoregression, stationality, trend, seasonality, complexity, stability, etc. may be used. In another example, signal analysis methods such as Fast Fourier Transformation, Discrete Wavelet Transformation, and energy analysis may be used. In another example, change point detection and entropy may be calculated.

At block 370, the dataset preparation service 140 determines a best performing machine learning model using the training dataset. In some aspects, determining the best performing machine learning model includes some or all of the following functions: data imputation, normalization, feature selection, model training, cross-validation, and fine-tuning.

At block 375, the dataset preparation service 140 generates features for the test dataset, e.g., using the features that are included in the best-performing machine learning model. In some aspects, generating the features for the test dataset comprises determining the intra-flight features that are used by the best-performing machine learning model, and generating the intra-flight features for each flight of the test dataset. The operations performed at block 375 may be similar to operations performed in block 310 above, but here corresponds to only a subset of the intra-flight features.

In some aspects, generating the features for the test dataset further comprises generating, using the intra-flight features, one or more cross-flight features for each flight represented in the test dataset. In some aspects, the one or more cross-flight features span a period from installation of the component to the target flight. Notably, generating the one or more cross-flight features differs from block 365 in that the flight series are only original flight series in this case (e.g., does not include modified copies of flight series).

In some aspects, the dataset preparation service 140 applies the best-performing model on all of the datasets, and uses its performance to determine whether or not to adopt the best-performing model. The method 300 ends following completion of block 375.

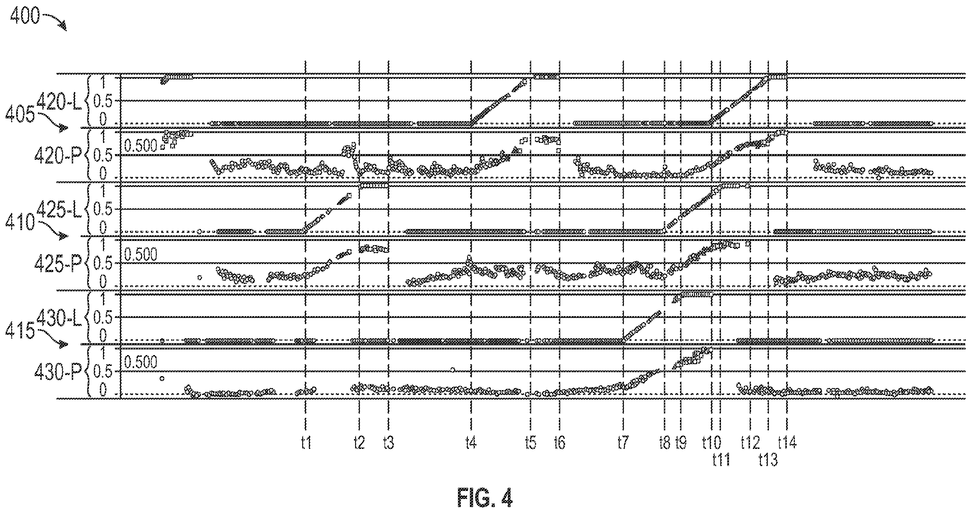

Figure 4 is a diagram 400 depicting plots of assigning labels to instances using a clipped linear function, according to one or more aspects. The features described with respect to the diagram 400 may be used in conjunction with other aspects. For example, the diagram 400 may represent exemplary operation of the dataset preparation service 140 described above.

Each of the graphs 405, 410, 415 includes data for a different aircraft 105, each having multiple instances of a component installed. The graphs 405, 410, 415 include respective upper plots 420-L, 425-L, 430-L that represent assigned labels for flight series according to a clipped linear function, and respective lower plots 420-P, 425-P, 430-P that show a predicted label for the flight series using a best-performing machine learning model. Notably the lower plots 420-P, 425-P, 430-P and the upper plots 420-L, 425-L, 430-L include discontinuities which may represent missing flight sensor data, periods when components are being repaired or replaced, and so forth.

Continuous number labels may be partitioned into groups in such a way that the number of instances for each label is approximately the same. In one non-limiting example, using the clipped linear function, the label "0" is assigned to a first group, the label "1" is assigned to a second group, and all other values (between zero and one) are assigned to a third group.

When a desired number of flight series to be used for training is smaller than the available number of flight series for the particular label, a random subsampling method may be used to select the desired number of flight series. Generally, each flight series represents a sequence of flights beginning with the installation of a component and concluding with a flight (or instance) that is assigned the individual label.

When the desired number of flight series to be used for training is greater than the available number of flight series for the particular label, a plurality of flight series may be generated using synthesized flight series that are generated according to techniques discussed above.

In the diagram 400, before time t4, the assigned labels for the upper plot 420-L is zero. Between time t4 and time t5, the assigned label for the upper plot 420-L linearly increases from zero to one, which indicates that the value of a feature is between a lower threshold (e.g., 90 days to fault) and an upper threshold (e.g., 30 days to fault). Between time t5 and time t6, the assigned label for the upper plot 420-L is one (indicating that the value of the feature has exceeded the upper threshold). Following time t6, the particular component is replaced and the assigned labels returned to zero. The cycle then repeats: between time t10 and time t13, the assigned label for the upper plot 420-L increases from zero to one, and between time t13 and time t14, the assigned label for the upper plot 420-L is one until the particular component is again replaced.

Before time t1, the assigned labels for the upper plot 425-L is zero. Between time t1 and time t2, the assigned label for the upper plot 425-L linearly increases from zero to one. Between time t2 and time t3, the assigned label for the upper plot 425-L is one. Following time t3, the particular component is replaced and the assigned labels returned to zero. The cycle then repeats: between time t8 and time t11, the assigned label for the upper plot 425-L increases from zero to one, and between time t11 and time t12, the assigned label for the upper plot 425-L is one until the particular component is again replaced.

Before time t7, the assigned labels for the upper plot 430-L is zero. Between time t7 and time t9, the assigned label for the upper plot 430-L linearly increases from zero to one. Between time t9 and time t10, the assigned label for the upper plot 430-L is one. Following time t10, the particular component is replaced and the assigned labels returned to zero.

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Further examples are set out in the clauses below:
1. A method of generating a balanced training dataset for a machine learning model, the method comprising: receiving flight sensor data corresponding to a plurality of flights; applying one or more criteria to the flight sensor data to generate a training dataset comprising a plurality of first instances corresponding to flights of the plurality of flights; assigning, using component fault data, respective labels to the plurality of first instances; and generating, for groups of one or more labels of the respective labels, a respective plurality of flight series, each flight series comprising a respective sequence of second instances that is based on some of the plurality of first instances, and that concludes with a second instance that is assigned a label included in the group.
2. The method of clause 1, wherein generating the respective plurality of flight series comprises, for a first group of the groups: determining a count of those first instances, of the plurality of first instances, that have a label included in the first group; determining a scale factor based on a quotient of a target number of flight series and the count of the first instances; and
   generating a scale factor number of copies of each of the first instances having a label included in the first group.
3. The method of clause 2, wherein generating the respective plurality of flight series further comprises: forming the sequence of second instances, wherein forming the sequence of second instances comprises: adding noise to values of one or more respective features of the scale factor number of copies of each of the first instances.
4. The method of clause 3, wherein forming the sequence of second instances further comprises: dropping one or more second instances from an initial sequence of second instances.
5. The method of any one of the preceding clauses, wherein assigning respective labels to the plurality of first instances is according to a remaining useful life (RUL) function for an aircraft component.
6. The method of clause 5, wherein assigning respective labels to the plurality of first instances comprises: applying a clipped linear function to the RUL function, such that values of the RUL function between an upper threshold and a lower threshold are assigned linearly interpolated values as the respective labels.
7. The method of any one of the preceding clauses, further comprising: generating one or more cross-flight features for the plurality of flight series.
8. A computer program product comprising: a computer-readable storage medium having computer-readable program code embodied therewith, the computer-readable program code executable by one or more computer processors to perform an operation comprising: receiving flight sensor data corresponding to a plurality of flights;
   applying one or more criteria to the flight sensor data to generate a training dataset comprising a plurality of first instances corresponding to flights of the plurality of flights;
   assigning, using component fault data, respective labels to the plurality of first instances; and generating, for groups of one or more labels of the respective labels, a respective plurality of flight series, each flight series comprising a respective sequence of second instances that is based on some of the plurality of first instances, and that concludes with a second instance that is assigned a label included in the group.
9. The computer program product of clause 8, wherein generating the respective plurality of flight series comprises, for a first group of the groups: determining a count of those first instances, of the plurality of first instances, that have a label included in the first group;
   determining a scale factor based on a quotient of a target number of flight series and the count of the first instances; and generating a scale factor number of copies of each of the first instances having a label included in the first group.
10. The computer program product of clause 9, wherein generating the respective plurality of flight series further comprises: forming the sequence of second instances, wherein forming the sequence of second instances comprises: adding noise to values of one or more respective features of the scale factor number of copies of each of the first instances.
11. The computer program product of clause 10, wherein forming the sequence of second instances further comprises: dropping one or more second instances from an initial sequence of second instances.
12. The computer program product of any one of clauses 8-11, wherein assigning respective labels to the plurality of first instances is according to a remaining useful life (RUL) function for an aircraft component.
13. The computer program product of clause 12, wherein assigning respective labels to the plurality of first instances comprises: applying a clipped linear function to the RUL function, such that values of the RUL function between an upper threshold and a lower threshold are assigned linearly interpolated values as the respective labels.
14. The computer program product of any one of clauses 8-13, the operation further comprising: generating one or more cross-flight features for the plurality of flight series.
15. A system comprising: one or more processors; and a memory storing instructions that when executed by the one or more processors enable performance of an operation comprising: receiving flight sensor data corresponding to a plurality of flights;
   applying one or more criteria to the flight sensor data to generate a training dataset comprising a plurality of first instances corresponding to flights of the plurality of flights;
   assigning, using component fault data, respective labels to the plurality of first instances; and generating, for groups of one or more labels of the respective labels, a respective plurality of flight series, each flight series comprising a respective sequence of second instances that is based on some of the plurality of first instances, and that concludes with a second instance that is assigned a label included in the group.
16. The system of clause 15, wherein generating the respective plurality of flight series comprises, for a first group of the groups: determining a count of those first instances, of the plurality of first instances, that have a label included in the first group; determining a scale factor based on a quotient of a target number of flight series and the count of the first instances; and generating a scale factor number of copies of each of the first instances having a label included in the first group.
17. The system of clause 16, wherein generating the respective plurality of flight series further comprises: forming the sequence of second instances, wherein forming the sequence of second instances comprises: adding noise to values of one or more respective features of the scale factor number of copies of each of the first instances.
18. The system of clause 17, wherein forming the sequence of second instances further comprises: dropping one or more second instances from an initial sequence of second instances.
19. The system of any one of clauses 15-18, wherein assigning respective labels to the plurality of first instances is according to a remaining useful life (RUL) function for an aircraft component.
20. The system of clause 19, wherein assigning respective labels to the plurality of first instances comprises: applying a clipped linear function to the RUL function, such that values of the RUL function between an upper threshold and a lower threshold are assigned linearly interpolated values as the respective labels.

While the foregoing is directed to aspects of the present disclosure, other and further aspects of the disclosure may be devised without departing from the basic scope thereof, and the scope thereof is determined by the claims that follow.

## Claims

1. A method (300) of generating a balanced training dataset for a machine learning model (175), the method comprising:
receiving (305) flight sensor data (145) corresponding to a plurality of flights (205-1, ..., 205-M);
applying (310) one or more criteria to the flight sensor data to generate a training dataset comprising a plurality of first instances (210-1, ..., 210-M, 215) corresponding to flights of the plurality of flights;
assigning (320), using component fault data (150), respective labels (220-1, ..., 220-M) to the plurality of first instances; and
generating (330), for groups (G1, ..., GN) of one or more labels of the respective labels, a respective plurality of flight series (155-1, ..., 155-N), each flight series comprising a respective sequence of second instances (240) that is based on some of the plurality of first instances, and that concludes with a second instance that is assigned a label included in the group.

2. The method of claim 1, wherein generating the respective plurality of flight series comprises, for a first group of the groups:
determining (335) a count of those first instances, of the plurality of first instances, that have a label included in the first group;
determining (340) a scale factor based on a quotient of a target number of flight series and the count of the first instances; and
generating (345) a scale factor number of copies of each of the first instances having a label included in the first group; and optionally
wherein generating the respective plurality of flight series further comprises:
forming (350) the sequence of second instances, wherein forming the sequence of second instances comprises:
adding (355) noise to values of one or more respective features of the scale factor number of copies of each of the first instances; and optionally wherein forming the sequence of second instances further comprises:
dropping (360) one or more second instances from an initial sequence of second instances.

3. The method of any one of the preceding claims, wherein assigning respective labels to the plurality of first instances is according to a remaining useful life (RUL) function for an aircraft component; and optionally
wherein assigning respective labels to the plurality of first instances comprises:
applying (325) a clipped linear function to the RUL function, such that values of the RUL function between an upper threshold and a lower threshold are assigned linearly interpolated values as the respective labels.

4. The method of any one of the preceding claims, further comprising:
generating (365) one or more cross-flight features for the plurality of flight series.

5. A computer program product comprising:
a computer-readable storage medium (135) having computer-readable program code embodied therewith, the computer-readable program code executable by one or more computer processors (130) to perform an operation comprising:
receiving (305) flight sensor data (145) corresponding to a plurality of flights (205-1, ..., 205-M);
applying (310) one or more criteria to the flight sensor data to generate a training dataset comprising a plurality of first instances (210-1, ..., 210-M, 215) corresponding to flights of the plurality of flights;
assigning (320), using component fault data (150), respective labels (220-1, ..., 220-M) to the plurality of first instances; and
generating (330), for groups (G1, ..., GN) of one or more labels of the respective labels, a respective plurality of flight series (155-1, ..., 155-N), each flight series comprising a respective sequence of second instances (240) that is based on some of the plurality of first instances, and that concludes with a second instance that is assigned a label included in the group.

6. The computer program product of claim 5, wherein generating the respective plurality of flight series comprises, for a first group of the groups:
determining (335) a count of those first instances, of the plurality of first instances, that have a label included in the first group;
determining (340) a scale factor based on a quotient of a target number of flight series and the count of the first instances; and
generating (345) a scale factor number of copies of each of the first instances having a label included in the first group; and optionally
wherein generating the respective plurality of flight series further comprises:
forming (350) the sequence of second instances, wherein forming the sequence of second instances comprises:
adding (355) noise to values of one or more respective features of the scale factor number of copies of each of the first instances; and optionally
wherein forming the sequence of second instances further comprises:
dropping (360) one or more second instances from an initial sequence of second instances.

7. The computer program product of claim 5 or 6, wherein assigning respective labels to the plurality of first instances is according to a remaining useful life (RUL) function for an aircraft component.

8. The computer program product of claim 7, wherein assigning respective labels to the plurality of first instances comprises:
applying (325) a clipped linear function to the RUL function, such that values of the RUL function between an upper threshold and a lower threshold are assigned linearly interpolated values as the respective labels.

9. The computer program product of any one of claims 5-8, the operation further comprising:
generating (365) one or more cross-flight features for the plurality of flight series.

10. A system (100) comprising:
one or more processors (130); and
a memory (135) storing instructions that when executed by the one or more processors enable performance of an operation comprising:
receiving (305) flight sensor data (145) corresponding to a plurality of flights (205-1, ..., 205-M);
applying (310) one or more criteria to the flight sensor data to generate a training dataset comprising a plurality of first instances (210-1, ..., 210-M, 215) corresponding to flights of the plurality of flights;
assigning (320), using component fault data (150), respective labels (220-1, ..., 220-M) to the plurality of first instances; and
generating (330), for groups (G1, ..., GN) of one or more labels of the respective labels, a respective plurality of flight series (155-1, ..., 155-N), each flight series comprising a respective sequence of second instances (240) that is based on some of the plurality of first instances, and that concludes with a second instance that is assigned a label included in the group.

11. The system of claim 10, wherein generating the respective plurality of flight series comprises, for a first group of the groups:
determining (335) a count of those first instances, of the plurality of first instances, that have a label included in the first group;
determining (340) a scale factor based on a quotient of a target number of flight series and the count of the first instances; and
generating (345) a scale factor number of copies of each of the first instances having a label included in the first group.

12. The system of claim 11, wherein generating the respective plurality of flight series further comprises:
forming (350) the sequence of second instances, wherein forming the sequence of second instances comprises:
adding (355) noise to values of one or more respective features of the scale factor number of copies of each of the first instances.

13. The system of claim 12, wherein forming the sequence of second instances further comprises:
dropping (360) one or more second instances from an initial sequence of second instances.

14. The system of any one of claims 10-13, wherein assigning respective labels to the plurality of first instances is according to a remaining useful life (RUL) function for an aircraft component.

15. The system of claim 14, wherein assigning respective labels to the plurality of first instances comprises:
applying (325) a clipped linear function to the RUL function, such that values of the RUL function between an upper threshold and a lower threshold are assigned linearly interpolated values as the respective labels.
